(19) Europäisches Patentamt
European Patent Office
Office européen des brevets

(11) **EP 0 848 264 A1**

(12) **EUROPEAN PATENT APPLICATION**

(43) Date of publication:
17.06.1998 Bulletin 1998/25

(51) Int. Cl.⁶: $G01V\ 1/145$, $G01M\ 7/08$

(21) Application number: 96309084.0

(22) Date of filing: 12.12.1996

(84) Designated Contracting States:
AT BE CH DE DK ES FI FR GB GR IE IT LI LU NL PT SE

(71) Applicant: EUROPEAN COMMUNITY
2920 Luxembourg (LU)

(72) Inventors:
• Albertini, Carlo
21027 Ispra (VA) (IT)

• Labibes, Kamel
21021 Angera (VA) (IT)

(74) Representative:
Parker, Nigel Edward et al
H.N. & W.S. Skerrett
Charles House
148/9 Great Charles Street
Birmingham B3 3HT (GB)

(54) **Seismic wave simulation apparatus**

(57) Seismic wave simulation apparatus (1) includes an elastic energy accumulator (4) shaped to induce a simulated seismic wave of known form in a geological specimen (2) in which is embedded the foundation (3) of a building. A hydraulic actuator (5) is used to preload the accumulator (4) in a direction reverse to arrow A and an explosive bolt (6) is exploded, thereby releasing the energy of the accumulator (4) as a seismic wave through the geological specimen (2). The specimen (2) is provided with transducer bars (8) and an electrified metallic thin sheet (9) connected to a Wheastone bridge in order to obtain various measurements.

FIG.1.

EP 0 848 264 A1

## Description

This invention relates to seismic wave simulation apparatus more particularly but not exclusively for simulating earthquake phenomena occurring in soil and in a foundation embedded in the soil, which foundation may be for example, part of a building.

Conventionally, simulation of a seismic wave or earthquake in a structure or building is done by means of a pseudo-dynamic test (reaction wall) or by the "shaking" table. In order to simulate seismic waves or earthquakes occurring in soil, explosives are used which tend to be inconvenient since the explosives do not generate waves of known energy content and shape and duration having characteristics of earthquakes. Thus, using such methods to simulate seismic waves or earthquakes does not allow wave propagation laws and effects to be properly established through seismic wave simulation in soil or other structures.

It is an object of the present invention to at least alleviate the aforementioned, or other, problem associated with seismic wave simulation apparatus and method.

According to the present invention there is provided seismic wave simulation apparatus capable of generating a simulated seismic wave in a geological specimen, said apparatus comprising an elastic energy accumulator shaped to deliver a seismic wave of known amplitude and duration to the geological specimen under test, the elastic energy accumulator comprising an impactor member held, in use, adjacent the geological test specimen and supported to resist movement in a direction away from the specimen when the elastic energy accumulator is preloaded in said direction by actuator means, the arrangement being such that, in use, the preload force can be quelled suddenly, for example, by triggering an explosive bolt so that the impactor member is released into impact or energy transfer with the geological specimen thereby transmitting a seismic wave to the geological specimen.

The actuator means may be any convenient means such as a hydraulic or pneumatic actuator.

Usually, the apparatus will include transducers arranged to measure, in use, the mechanical behaviour across the section of the geological specimen through which a seismic wave is being transmitted.

Preferably, the transducers are in the form of bars or elongate members arranged in a direction parallel to the direction of propagation of the seismic wave. Seismic sensors may also be included extending at an angle or transversely of the direction of propagation of the wave.

Usually, the elastic energy accumulator is shaped to simulate a seismic wave of known characteristics in order that wave propagation laws and effects can be properly established. Accordingly, the shape of the elastic energy accumulator may be chosen according to the principles expounded in the description from the estimation of stress wave values between two long bars with different acoustic impedance.

In one embodiment of the present invention, the elastic energy accumulator includes seven cylindrical sections of different diameter. Preferably, one of those sections nearest the actuator means has the smallest diameter of the sections and, where an explosive bolt is provided as aforementioned, to release the impact energy said explosive bolt is, preferably, provided in this section and preferably is aligned diametrically of said section. Said smallest diameter section may adjoin a large diameter section which is connected to two further sections stepped down in diameter connected in turn to a smaller diameter section (which is larger than the first-mentioned smallest section adjacent the actuator means). This smaller diameter section may be connected to two larger sections which are stepped up in diameter, the last of these sections being adjacent to the geological specimen in use. The length of the elastic energy accumulator (comprised of said seven sections) and the actuator means may be in the order of 500 metres.

The impactor member may be guided and held adjacent the geological specimen, preferably by said last-mentioned section. A blocking system or fixed support may be provided at the rear of said last-mentioned section surrounding the penultimate section, thereby resisting or preventing movement of the impactor member in said direction on the application of the preload force.

Preferably, in order to obtain measurements regarding local displacements of the soil in the geological specimen, said apparatus may include a thin metallic or conductive sheet fixed to the surface of the geological specimen (for example by cement) and connected up to measuring instrumentation such as a Wheastone bridge, for example, in order to obtain superficial strain measurement. In carrying out the test a building foundation or the like may be embedded in the geological specimen in order to investigate the interaction between the soil and foundation on the application of a simulated seismic wave.

The measuring instrumentation may include accelerometers.

Further according to the present invention there is provided a method of inducing or generating a simulated seismic wave in a test specimen, for example, a geological specimen, said method including shaping an elastic energy accumulator to deliver a seismic wave of known amplitude and duration to the test specimen, holding one end of the elastic energy accumulator adjacent to the specimen and preloading the elastic energy accumulator in a direction away from the specimen, suddenly quelling the preload force, for example by triggering an explosive bolt in the elastic energy accumulator, thereby releasing the elastic energy accumulator into impact or energy transfer with said specimen and transmitting a simulated seismic wave therethrough, said method comprising collecting data from the specimen and analysing said data collected.

Further advantageous apparatus and method features of the present invention will be evident from the following description and drawings.

An embodiment of seismic wave simulation apparatus for generating a seismic wave in a geological specimen will now be described, by way of example only, with reference to the accompanying simplified diagrammatic drawings in which:

FIGURE 1 shows the seismic wave simulation apparatus adjacent a geological specimen having the foundation of a building embedded therein;

FIGURE 2 shows a simple cylindrical bar preloaded to yield a virtually rectangular stress wave, and

FIGURE 3 shows cylindrical bars of two different sections arranged to yield a different stress wave pattern.

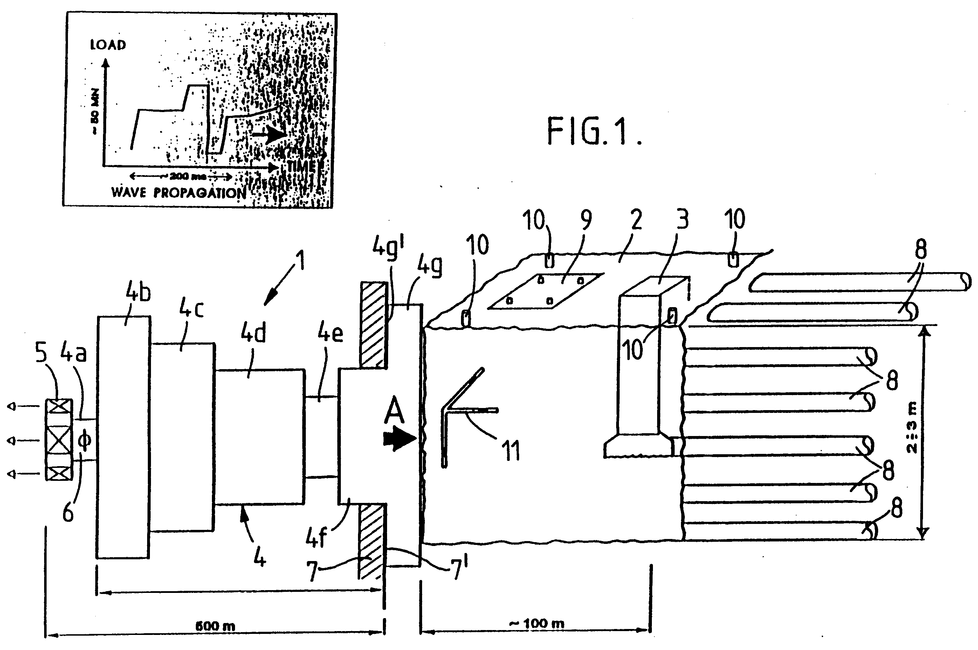

FIGURE 1 of the drawings shows schematically seismic wave simulation apparatus 1 positioned to the left of a geological specimen 2 in which is embedded the foundation 3 of a building (not shown). The seismic wave simulation apparatus has an elastic energy accumulator 4 comprising an impactor member which can be preloaded in tension in a direction away from the geological specimen 2 (i.e. in a direction reverse to arrow A) by means of a hydraulic actuator 5. The apparatus 1 includes a blocking or support system which effectively fixes the right hand end of the elastic energy accumulator 4 whilst said accumulator is preloaded in tension.

The elastic energy accumulator is specially shaped to simulate a seismic wave of known characteristics, such as the wave shown in the top left hand corner of FIGURE 1 in order that wave propagation laws and effects throughout the geological specimen 2 and foundation 3 can be properly established.

It is to be noted that the energy accumulator in the present instance includes seven sections 4a to 4g of varying diameter and the geometry of this energy accumulator may be modified in order to obtain different wave shapes of known characteristics.

FIGURE 1 shows only one such configuration where reflections can provide many wave shapes of different amplitude in tension and in compression. Section 4a of the energy accumulator 4 has the narrowest diameter and an explosive bolt 6 extends diametrically of the section.

It is to be understood that once the energy accumulator has been preloaded by the hydraulic actuator this energy can be released and transmitted as a seismic wave through the geological specimen 2 when the bolt 6 is exploded. In order to create wave propagation the energy stored in the energy accumulator 4 should be released suddenly. The explosive bolt 6 is the weak part of the energy accumulator and when this part is broken the energy is released. Usually, explosive will be inserted inside the bolt which allows said bolt to rupture in a very brief time in order to obtain a stress wave with a short rise time.

The right hand end section 4g of the energy accumulator has a rear face 4g' which engages the front face 7' of the blocking or support system 7 when the hydraulic actuator 5 places the energy accumulator 4 under preload conditions, in a manner which should be evident from the drawings.

The manner in which the geometry of the energy accumulator 4 may be modified in order to obtain particular wave shapes is explained below. The duration of the wave is a function of the length of the energy accumulator and the amplitude can be determined by modifying the acoustic impedance along the energy accumulator 4.

Estimation of the stress wave values between two long bars with different acoustic impedance.

It can be shown that the amplitude of the stress $\sigma$ in the case of stress wave propagation is a linear function of the particle velocity V:

$$\sigma = \rho.C.V. \qquad (1)$$

$\rho$ is the density of the medium (bar)
C is the wave velocity.

This equation can be used to estimate the wave transmission and reflection through the interfaces of two bars in contact with a different acoustical impedance. In this case two conditions should be satisfied:
The loads at the interface between the two bars are equal at each instant:

$$A(\sigma_i + \sigma_r) = A.\ \sigma_t \qquad (2)$$

A is the cross sectional area of the bar at the interface. The particle velocities at the interface between the two bars are equal at each instant:

$$V_i = V_r + V_t \qquad (3)$$

By using equation (1) in equation (2) we obtain that:

$$A_1\ (\rho_1 C_1 V_i) + A_1(\rho_1 C_1 V_r) = A_2\ (\rho_2 C_2 V_t) \qquad (4)$$

with equation 3 we obtain that:

$$V_r = \frac{A_{2r}\rho_2 C_2 - A_1\rho_1 C_1}{A_{2r}\rho_2 C_2 + A_1\rho_1 C_1} V_1 \qquad (5)$$

and

$$V_t = \frac{2A_1\rho_1C_2}{A_{2r}\rho_2C_2 + A_1\rho_1C_1}V_i \qquad (6)$$

By writing these equations for stresses we have:

$$\sigma_2 = \frac{A_{2r}\rho_2C_2 - A_1\rho_1C_1}{A_{2r}\rho_2C_2 + A_1\rho_1C_1}\sigma_i \qquad (7)$$

$$\sigma_t = \frac{2A_1\rho_2C_2}{A_{2r}\rho_2C_2 + A_1\rho_1C_1}\sigma_1 \qquad (8)$$

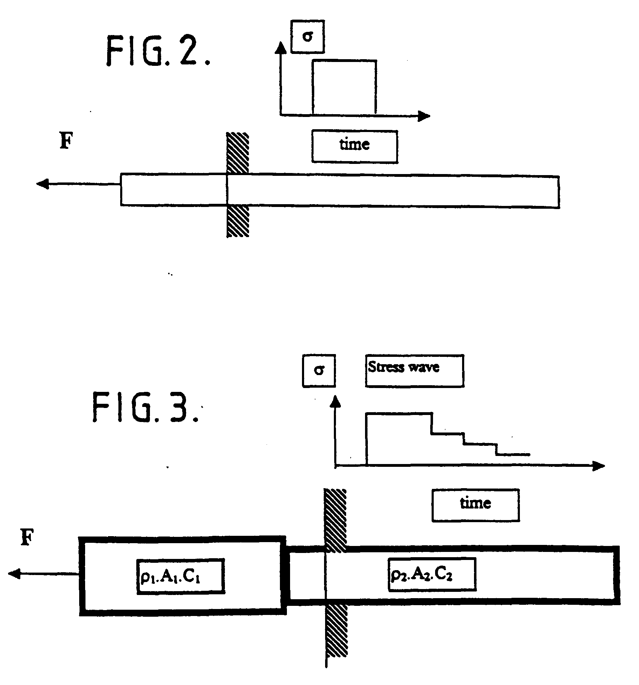

If a bar is preloaded with an acoustic impedance $\rho_1A_1C_1$ the stress wave generated is nearly rectangular (FIGURE 2). This application could be the starting point to understand the basic behaviour of wave propagation in the soil and will permit the validation of the calcul codes used to describe the earthquake phenomena. Two cylindrical bars with two different sections (as shown in FIGURE 3) and a longitudinal stress wave which propagates from one end of the left bar can now be considered. If the acoustic impedance $\rho 1C_1A_1 > \rho_2A_2C_2$ then we obtain a wave which decreases in function of time. The amplitude and the shape of the wave generated can be found knowing the impedance and also the length of the bars to obtain the transit time. Using the above formula in a numerical programme it is possible to know the shape of the wave which could be generated in function of the geometry of the energy accumulator.

The geological specimen 2 may be a soil rocks specimen and, in order to measure the mechanical behaviour across the section of the geological specimen, transducer bars 8 are provided in the specimen as shown in FIGURE 1. The transducer bars 8 are instrumented with strain gauges and measurements taken in a generally known manner. Additionally, in order to obtain measurements regarding local displacements of the soil in the geological specimen 2 an electrified metallic thin sheet 9 is fixed firmly to the surface of the soil by a cement and connected up to a measuring instrumentation such as a Wheastone bridge, in the case of resistance strain gauges, in order to obtain superficial strain measurement.

Thus, in the present instance, a simulated seismic wave can be transmitted through the geological specimen 2 and through a building foundation 3, so interaction between the soil and the foundation can be studied and evaluated.

Any other measuring instrumentation may be provided such as the accelerometers 10 and embedded seismic sensor bar 11.

It is believed the seismic wave simulation apparatus 1 can be used to provide a deterministic approach to monitoring and predicting:

(a) earthquakes,
(b) large ground displacements of natural and artificial origin;
(c) explosion effects of mining work and large civil engineering works,
(d) volcanic activity,
(e) the dynamic interaction between soil and structures.

This approach is based on the stress wave release and wave propagation measurements from or in fracturing rock specimens.

Furthermore, the seismic wave simulation wave apparatus allows different kinds of soils to be submitted to earthquake-like effects at large-scale, the interaction between soil and foundations to be studied. The apparatus should allow precise measures of attenuation laws for acceleration, magnitude as a function of distance etc. since initial energy into the soil is well known and the measurement is performed without modification of the wave. Propagation laws and explosive waves for the optimisation of mining and large excavation works could be tested and a large displacement could be reached (up to 5 metres) for an ELEA of 500 meters.

Advantageously, embodiments of the present invention may provide:

(1) A precision seismic load testing device of large geological specimens of homogeneous or composite nature reproducing a significantive sample of the earth crust in which propagation parameters (load, displacement, speed, accelerations) of seismic/explosive waves can be locally and globally measured.
(2) Accumulation of a large amount of potential energy released as a real seismic/explosive wave of well known shape, amplitude and duration by proper sizing of length and cross section of the ELEA allowing very large displacements without enormous complication of inertial effects that would characterise, for example, a hydraulic machine.
(3) Bar transducers having a tuned mechanical impedance with the soil/rock specimen in order to capture without modification the seismic/explosive wave arising in the points of application.
(4) Bar transducers utilised as geotechnical transducers having the unique characteristic of the local contemporaneous direct measurement of load, displacement, speed and accelerations provoked by the seismic/explosive wave propagation because of their elasticity and length.

It is to be understood that the scope of the present invention is not to be unduly limited by a particular choice of terminology and that a specific term may be replaced by any equivalent or generic term. Further it is to be understood that individual features, method or functions relating to the seismic wave simulation wave apparatus might be individually patentably inventive. The singular may include the plural and vice versa. Additionally, any range mentioned herein for any variable or parameter shall be taken to include a disclosure of any derivable subrange within that range or any particular value of the variable or parameter range within, or at an end of, the range or subrange.

## Claims

1. Seismic wave simulation apparatus capable of generating a simulated seismic wave in a geological specimen, said apparatus comprising an elastic energy accumulator shaped to deliver a seismic wave of known amplitude and duration to the geological specimen under test, the elastic energy accumulator comprising an impactor member held, in use, adjacent the geological test specimen and supported to resist movement in a direction away from the specimen when the elastic energy accumulator is preloaded in said direction by actuator means, the arrangement being such that, in use, the preload force can be quelled suddenly, for example, by triggering an explosive bolt so that the impactor member is released into impact or energy transfer with the geological specimen thereby transmitting a seismic wave to the geological specimen.

2. Apparatus as claimed in Claim 1 in which the actuator means is a hydraulic or pneumatic actuator.

3. Apparatus as claimed in Claim 1 or Claim 2 having tranducers arranged to measure, in use, the mechanical behaviour across the section of the geological specimen through which a seismic wave is being transmitted.

4. Apparatus as claimed in Claim 3 in which the transducers are in the form of bars or elongate members arranged in a direction parallel to the direction of propagation of the seismic wave.

5. Apparatus as claimed in any one of the preceding claims in which seismic sensors are included extending at an angle or transversely of the direction of propagation of the wave.

6. Apparatus as claimed in any one of the preceding claims in which the elastic energy accumulator is shaped to simulate a seismic wave of known characteristics.

7. Apparatus as claimed in Claim 6 in which the shape of the elastic energy accumulator is chosen according to the principles expounded in the description from the estimation of stress wave values between two long bars with different acoustic impedance.

8. Apparatus as claimed in any one of the preceding claims in which the elastic energy accumulator includes a plurality of cylindrical sections of different diameter.

9. Apparatus as claimed in Claim 8 having a section nearest the actuator means which is the smallest diameter of the sections.

10. Apparatus as claimed in Claim 9 including an explosive bolt aligned diametrically of said section.

11. Apparatus as claimed in Claim 9 or Claim 10 in which said smallest diameter section may adjoin a large diameter section which is connected to two further sections stepped down in diameter connected in turn to a smaller diameter section (which is larger than the first-mentioned smallest section adjacent the actuator means).

12. Apparatus as claimed in Claim 11 in which the smaller diameter section is connected to two larger sections which are stepped up in diameter, the last of these sections being adjacent to the geological specimen in use.

13. Apparatus as claimed in Claim 12 in which the impactor member is guided and held adjacent the geological specimen, by said last-mentioned section.

14. Apparatus as claimed in Claim 13 in which a blocking system or fixed support is provided at the rear of said last-mentioned section surrounding the penultimate section, thereby resisting or preventing movement of the impactor member in said direction on the application of the preload force.

15. Apparatus as claimed in any one of Claims 8 to 14 in which the elastic energy accumulator includes seven sections.

16. Apparatus as claimed in any one of the preceding claims in which the combined length of the elastic energy accumulator and the actuator means is in the order of 500 metres.

17. Apparatus as claimed in any one of the preceding claims including a thin metallic or conductive sheet fixed to the surface of the geological specimen (for example by cement) and connected up to measuring instrumentation such as a Wheastone bridge, for example, in order to obtain superficial strain measurement.

18. Apparatus as claimed in any one of the preceding claims in which the measuring instrumentation includes accelerometers.

19. A method of inducing or generating a simulated seismic wave in a test specimen, for example, a geological specimen, said method including shaping an elastic energy accumulator to deliver a seismic wave of known amplitude and duration to the test specimen, holding one end of the elastic energy accumulator adjacent to the specimen and preloading the elastic energy accumulator in a direction away from the specimen, suddenly quelling the preload force, for example by triggering an explosive bolt in the elastic energy accumulator, thereby releasing the elastic energy accumulator into impact or energy transfer with said specimen and transmitting a simulated seismic wave therethrough, said method comprising collecting data from the specimen and analysing said data collected.

FIG.1.

LOAD

~ 80 MN

~ 200 ms

TIME

WAVE PROPAGATION

EP 0 848 264 A1

FIG.2.

F

σ

time

FIG.3.

σ

Stress wave

time

F

$\rho_1.A_1.C_1$

$\rho_2.A_2.C_2$

**European Patent Office**

# EUROPEAN SEARCH REPORT

Application Number

EP 96 30 9084

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP 0 007 740 A (EURATOM) 6 February 1980<br>* abstract *<br>* page 1, line 18 - line 21 *<br>* page 2, line 19 - page 3, line 19 *<br>* page 4, line 2 - line 24 *<br>* page 5, line 11 - line 26 *<br>* claims 1-4; figures 1,2 *<br>--- | 1-4,19 | G01V1/145<br>G01M7/08 |
| A | GB 2 211 611 A (COAL IND) 5 July 1989<br>* abstract; figure 1 *<br>--- | 1-4,19 | |
| A | FR 2 229 967 A (EURATOM) 13 December 1974<br>* claims 1,2,4 *<br>--- | 1-4 | |
| A | EP 0 410 370 A (EUROP COMMUNITIES) 30 January 1991<br>* column 1, line 12 - line 26 *<br>--- | 4 | |
| A | WO 81 00459 A (CONOCO INC;FAIR D; BULLER P) 19 February 1981<br>--- | | |
| A | PROCEEDINGS OF THE INSTRUMENTATION AND MEASUREMENT TECHNOLOGY CONFERENCE, ORVINE, CA., MAY 18 - 20, 1993,<br> no. -, 18 May 1993, INSTITUTE OF ELECTRICAL AND ELECTRONICS ENGINEERS,<br>pages 228-231, XP000400175<br>DI PRISO M ET AL: "PVDF PIEZOELECTRIC SENSORS AND RELATED ELECTRONICS STRUCTURAL ENGINEERING APPLICATIONS"<br>* figure 1 *<br>----- | 4,17 | **TECHNICAL FIELDS SEARCHED** (Int.Cl.6)<br><br>G01V<br>G01M<br>G01N |

The present search report has been drawn up for all claims

| Place of search | Date of completion of the search | Examiner |
|---|---|---|
| THE HAGUE | 10 June 1997 | de Heering, P |